# EUROPEAN PATENT APPLICATION

(11) **EP 2 632 209 A2**
(43) Date of publication of application: **28.08.2013**
(21) Application number: 13153204.6
(22) Date of filing: 30.01.2013
(51) Int. Cl.: H04W 52/02

(54) **Method, apparatus, and computer program product for coexistence-aware communication mechanism for multi-radios**

(30) Priority: 24.02.2012 US 201213404196
(71) Applicant: Nokia Corporation, 02150 Espoo (FI)
(72) Inventor: Kiminki, Sami, 00270 Helsinki (FI); Piipponen, Antti-Veikko, 01690 Vantaa (FI); Zetterman, Tommi, 02680 Espoo (FI); Knuuttila, Jussi, 00100 Helsinki (FI); Hirvisalo, Vesa, 00650 Helsinki (FI)
(74) Representative: Nokia Corporation

(57) **Abstract**

Method, apparatus, and computer program product embodiments are disclosed to enhance multi-radio coexistence. An example embodiment comprises: determining for a first radio in a multi-radio device, a next instant of activity; transmitting by a second radio in the multi-radio device, to another wireless device, control information including a duration value for an interval to occur before a next instant of activity by the first radio, during which interval wireless communication between the second radio of the multi-radio device and the another wireless device must be completed; and entering by the second radio in the multi-radio device, a power save state by end of the interval.

## Description

### FIELD:

The field of technology relates to wireless communication and more particularly to multi-radio coexistence.

### BACKGROUND:

Modem society has adopted, and is becoming reliant upon, wireless communication devices for various purposes, such as connecting users of the wireless communication devices with other users. Wireless communication devices may vary from battery powered handheld devices to stationary household and/or commercial devices utilizing an electrical network as a power source. Due to rapid development of the wireless communication devices, a number of areas capable of enabling entirely new types of communication applications have emerged.

Cellular networks facilitate communication over large geographic areas. These network technologies have commonly been divided by generations, starting in the late 1970s to early 1980s with first generation (1G) analog cellular telephones that provided baseline voice communications, to modem digital cellular telephones. GSM is an example of a widely employed 2G digital cellular network communicating in the 900 MHZ/1.8 GHZ bands in Europe and at 850 MHz and 1.9 GHZ in the United States. While long-range communication networks, like GSM, are a well-accepted means for transmitting and receiving data, due to cost, traffic and legislative concerns, these networks may not be appropriate for all data applications.

Short-range communication technologies provide communication solutions that avoid some of the problems seen in large cellular networks. Bluetooth^{™} is an example of a short-range wireless technology quickly gaining acceptance in the marketplace. In addition to Bluetooth^{™} other popular short-range communication technologies include Bluetooth^{™} Low Energy, IEEE 802.11 wireless local area network (WLAN), Wireless USB (WUSB), Ultra Wide-band (UWB), ZigBee (IEEE 802.15.4, IEEE 802.15.4a), and ultra high frequency radio frequency identification (UHF RFID) technologies. All of these wireless communication technologies have features and advantages that make them appropriate for various applications.

### SUMMARY:

Method, apparatus, and computer program product embodiments are disclosed for multi-radio coexistence.

Example embodiments of the invention include a method that comprises:
determining for a first radio in a multi-radio device, a next instant of activity;
transmitting by a second radio in the multi-radio device, to another wireless device, control information including a duration value for an interval to occur before a next instant of activity by the first radio, during which interval wireless communication between the second radio of the multi-radio device and the another wireless device must be completed; and
entering by the second radio in the multi-radio device, a power save state by end of the interval.

Example embodiments of the invention include the method that further comprises:
wherein the control information indicates the interval is scheduled on a repetitive basis by the first radio.

Example embodiments of the invention include the method that further comprises:
wherein the interval is one of an interference-free period, a quiet interval of the first radio in the multi-radio device, a sleep interval of the first radio in the multi-radio device, a communication opportunity, or a communication window.

Example embodiments of the invention include a method that comprises:
determining for a first radio in a multi-radio device, a next instant of activity;
generating control information for a second radio in the multi-radio device, including a duration value for an interval to occur before a next instant of activity by the first radio, during which interval wireless communication between the second radio of the multi-radio device and another wireless device must be completed;
causing the second radio in the multi-radio device, to transmit the control information to the another wireless device; and
causing the second radio in the multi-radio device, to enter a power save state by end of the interval.

Example embodiments of the invention include an apparatus that comprises:
at least one processor;
at least one memory including computer program code;
the at least one memory and the computer program code configured to, with the at least one processor, cause the apparatus at least to:
   determine for a first radio in a multi-radio device, a next instant of activity;
   cause the second radio in the multi-radio device, to transmit to another wireless device, control information including a duration value for an interval to occur before a next instant of activity by the first radio, during which interval wireless communication between the second radio of the multi-radio device and the another wireless device must be completed; and
   cause the second radio in the multi-radio device, to enter a power save state by end of the interval.

Example embodiments of the invention include an apparatus that comprises:
at least one processor;
at least one memory including computer program code;
the at least one memory and the computer program code configured to, with the at least one processor, cause the apparatus at least to:
   determine for a first radio in a multi-radio device, a next instant of activity;
   generate control information for a second radio in the multi-radio device, including a duration value for an interval to occur before a next instant of activity by the first radio, during which interval wireless communication between the second radio of the multi-radio device and another wireless device must be completed;
   cause the second radio in the multi-radio device, to transmit the control information to the another wireless device; and
   cause the second radio in the multi-radio device, to enter a power save state by end of the interval.

Example embodiments of the invention include a computer program product comprising computer executable program code recorded on a computer readable, non-transitory storage medium, the computer executable program code comprising:
code for determining for a first radio in a multi-radio device, a next instant of activity;
code for transmitting by a second radio in the multi-radio device, to another wireless device, control information including a duration value for an interval to occur before a next instant of activity by the first radio, during which interval wireless communication between the second radio of the multi-radio device and the another wireless device must be completed; and
code for entering by the second radio in the multi-radio device, a power save state by end of the interval.

Example embodiments of the invention include a computer program product comprising computer executable program code recorded on a computer readable, non-transitory storage medium, the computer executable program code comprising:
code for determining for a first radio in a multi-radio device, a next instant of activity;
code for generating control information for a second radio in the multi-radio device, including a duration value for an interval to occur before a next instant of activity by the first radio, during which interval wireless communication between the second radio of the multi-radio device and another wireless device must be completed;
code for causing the second radio in the multi-radio device, to transmit the control information to the another wireless device; and
code for causing the second radio in the multi-radio device, to enter a power save state by end of the interval.

Example embodiments of the invention include a method that comprises:
receiving, by a wireless device in a wireless network, control information including a duration value for an interval during which interval wireless communication with a source device of the control information must be completed; and
managing communications within the wireless network including scheduling communications with the source device of the control information to occur during the interval.

Example embodiments of the invention include the method that further comprises:
wherein the control information indicates the interval is scheduled on a repetitive basis.

Example embodiments of the invention include the method that further comprises:
wherein the interval is one of an interference-free period, a quiet interval of the source device, a sleep interval of the source device, a communication opportunity, or a communication window.

Example embodiments of the invention include an apparatus that comprises:
at least one processor;
at least one memory including computer program code;
the at least one memory and the computer program code configured to, with the at least one processor, cause the apparatus at least to:
   cause a wireless device in a wireless network, to receive control information including a duration value for an interval during which interval wireless communication with a source device of the control information must be completed; and
   manage communications within the wireless network including scheduling communications with the source device of the control information to occur during the interval.

Example embodiments of the invention include the apparatus that further comprises:
wherein the control information indicates the interval is scheduled on a repetitive basis.

Example embodiments of the invention include the apparatus that further comprises:
wherein the interval is one of an interference-free period, a quiet interval of the source device, a sleep interval of the source device, a communication opportunity, or a communication window.

Example embodiments of the invention include a computer program product comprising computer executable program code recorded on a computer readable, non-transitory storage medium, the computer executable program code comprising:
code for receiving, by a wireless device in a wireless network, control information including a duration value for an interval during which interval wireless communication with a source device of the control information must be completed; and
code for managing communications within the wireless network including scheduling communications with the source device of the control information to occur during the interval.

The resulting embodiments enhance multi-radio coexistence.

### DESCRIPTION OF THE FIGURES:

Figure 1A is an example network diagram of a wireless network, with a multi-radio device having both a WLAN radio and a cellular telephone radio in communication with both a WLAN access point and a cellular telephone base station, according to an example embodiment of the invention.
Figure 1B shows the example network diagram of Figure 1A, wherein the multi-radio device has determined for the cellular telephone radio of the multi-radio device, a next instant of activity, and the WLAN radio of the multi-radio device is shown transmitting to the WLAN access point device, control information including a value for a quiet interval or interference-free period to occur before the next instant of activity by the cellular telephone radio, according to an example embodiment of the invention.
Figure 1C shows the example network diagram of Figure 1A, wherein the WLAN radio of the multi-radio device exchanges wireless signals with the WLAN access point device only during the quiet interval or interference-free period of the cellular telephone radio of the multi-radio device, the access point transmitting to the WLAN radio wireless signals that it has previously buffered for the WLAN radio during a previous period when the cellular telephone radio of the multi-radio device was active, in response to the control information, according to an example embodiment of the invention.
Figure 1D shows the example network diagram of Figure 1A, wherein the access point ceases to transmit wireless signals to the WLAN radio of the multi-radio device following the termination of the quiet interval or interference-free period of the cellular telephone radio of the multi-radio device, the WLAN access point buffering wireless signals for the WLAN radio during the following period of activity of the cellular telephone radio, in response to the control information, according to an example embodiment of the invention.
Figure 1E illustrates an example of traffic interleaving in a multi-radio device having both a WLAN radio and a Long Term Evolution (LTE) cellular telephone radio, during hard interference conditions, according to an example embodiment of the invention.
Figure 1F illustrates an example timing related to a coexistence-aware poll (CXA-Poll), according to an example embodiment of the invention.
Figure 2A is an example functional block diagram, illustrating an example multi-radio device having both a WLAN radio and a cellular telephone radio, according to an example embodiment of the invention.

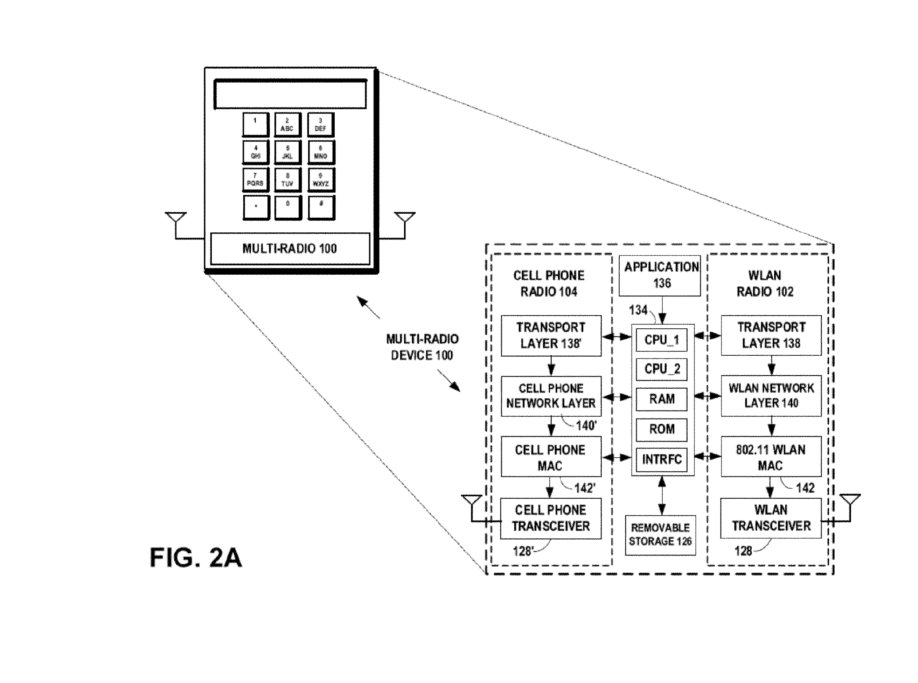

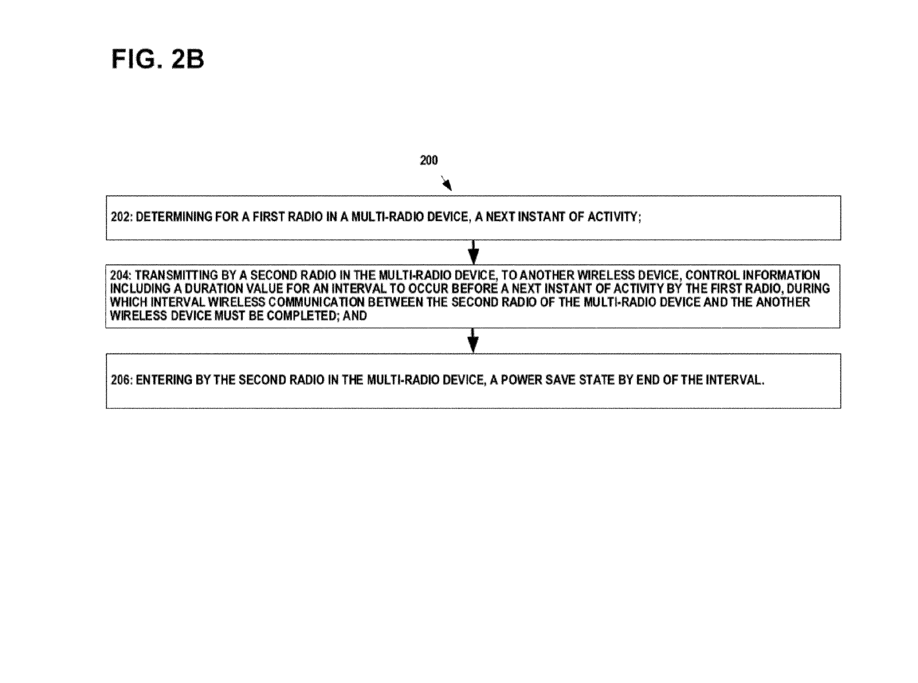

Figure 2B is an example flow diagram of operational procedures in the multi-radio device of Figure 2A, wherein the multi-radio device determines a next instant of activity for the cellular telephone radio, transmits to the WLAN access point device, control information including a value for a quiet interval or interference- free period to occur before the next instant of activity by the cellular telephone radio, and exchanges wireless signals with the WLAN access point device only during the quiet interval of the cellular telephone radio of the multi-radio device, in response to the control information, according to an example embodiment of the invention.

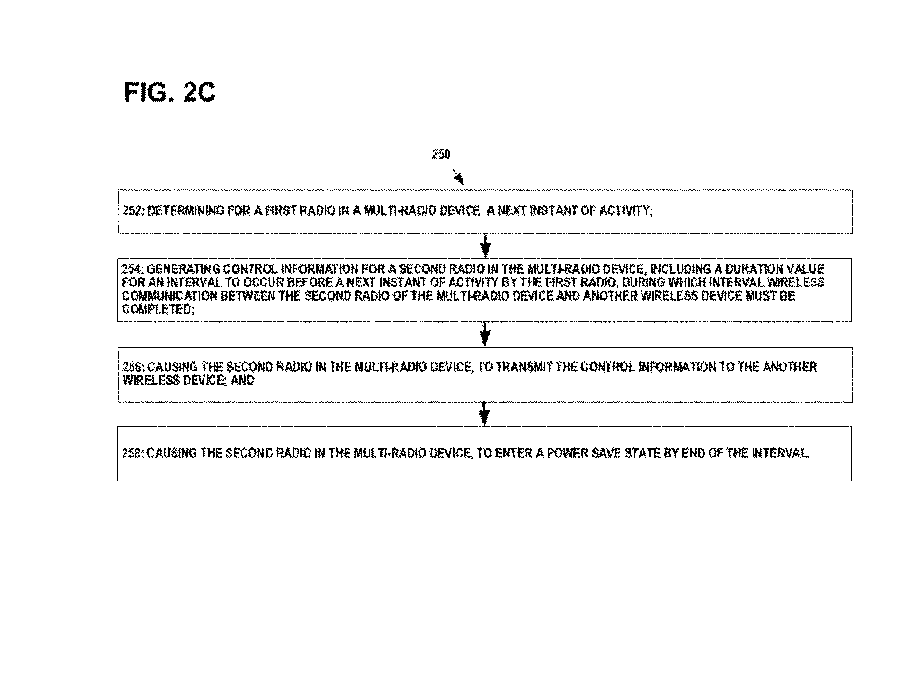

Figure 2C is an example flow diagram of operational procedures in the multi-radio device of Figure 2A, wherein the multi-radio device determines for a first radio in a multi-radio device, a next instant of activity; generates control information for a second radio in the multi-radio device, including a duration value for an interval to occur before a next instant of activity by the first radio, during which interval wireless communication between the second radio of the multi-radio device and another wireless device must be completed; causes the second radio in the multi-radio device, to transmit the control information to the another wireless device; and causes the second radio in the multi-radio device, to enter a power save state by end of the interval, in response to the control information, according to an example embodiment of the invention.
Figure 3A is an example functional block diagram, illustrating an example WLAN access point device, according to an example embodiment of the invention.

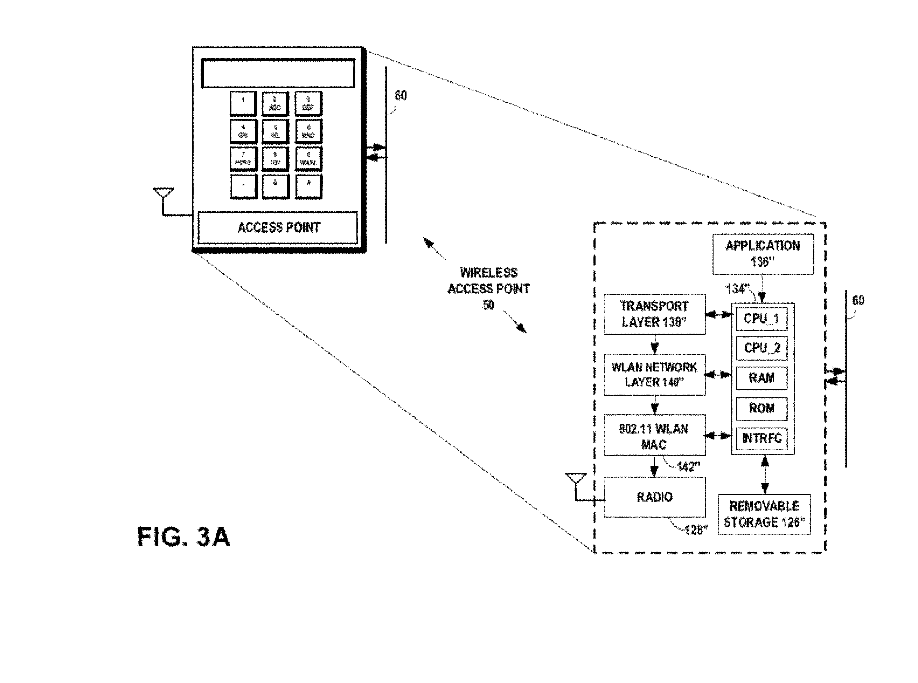

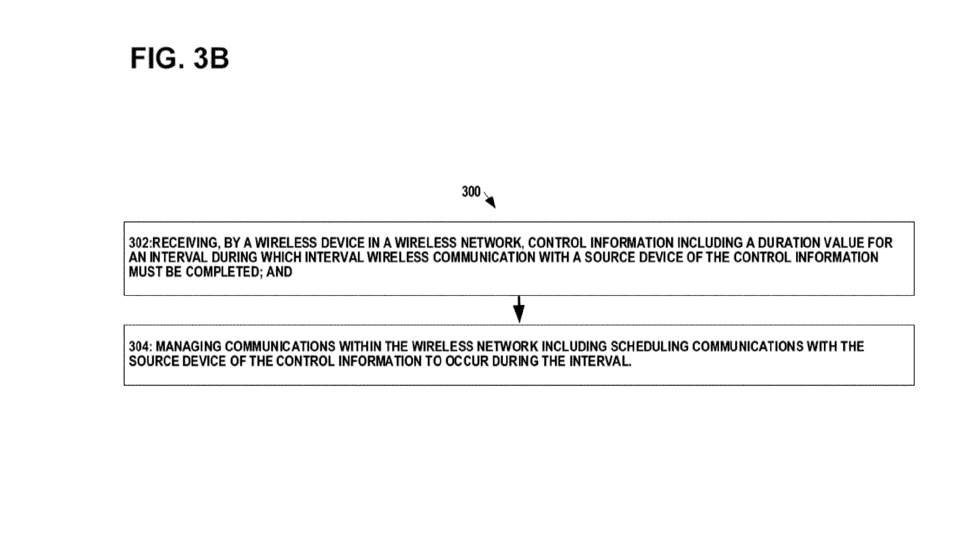

Figure 3B is an example flow diagram of operational procedures in the WLAN access point device of Figure 3A, wherein the access point schedules for transmission to the WLAN radio, wireless signals that it has previously buffered for the WLAN radio during a previous period when the cellular telephone radio of the multi-radio device was active, in response to the control information. The WLAN access point device may also schedule receiving wireless signals from the WLAN radio, in response to the control information. The WLAN access point may schedule ceasing to transmit wireless signals to the WLAN radio of the multi-radio device following the termination of the quiet interval or interference-free period of the cellular telephone radio of the multi-radio device, the WLAN access point buffering wireless signals for the WLAN radio during the following period of activity of the cellular telephone radio, in response to the control information, according to an example embodiment of the invention.
Figure 4 is an example frame structure of a packet containing the control information including a value for a quiet interval to occur before the next instant of activity by the cellular telephone radio, according to an example embodiment of the invention.
Figure 5 illustrates an example embodiment of the invention, wherein examples of removable storage media are shown, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with at least one embodiment of the present invention.
Figure 6 is an example of Long Term Evolution (LTE) cellular telephone radio mask patterns showing progressive down link (DL)/uplink (UL) mask patterns for time division duplex operation of the LTE radio, according to an example embodiment of the invention.
Figure 7 is an example discontinuous reception (DRX) smart scheduling overview for the LTE radio, according to an example embodiment of the invention.
Figure 8 illustrates an example simulated comparison of power save poll (PS-Poll) and coexistence-aware poll (CXA-Poll) of the WLAN radio, with uplink (UL)-Hybrid Automatic Repeat Request (HARQ)/downlink (DL)-HARQ patterns of the LTE radio, according to an example embodiment of the invention.

### DISCUSSION OF EXAMPLE EMBODIMENTS OF THE INVENTION:

This section is organized into the following topics:
A. WLAN Communication Technology
B. Coexistence-Aware Communication Mechanism for Multi-Radios
**A. WLAN Communication Technology**

The IEEE 802.11 standard specifies methods and techniques of an exemplary wireless local area network (WLAN) operation, examples include the IEEE 802.11b and 802.11g wireless local area network specifications, which have been a staple technology for traditional WLAN applications in the 2.4 GHz ISM band. The various amendments to the IEEE 802.11 standard were consolidated for IEEE 802.11 a, b, d, e, g, h, i, j protocols, into the base standard IEEE 802.11-2007, Wireless Medium Access Control (MAC) and Physical Layer (PHY) Specifications, June 2007 (incorporated herein by reference). Since then, emerging broadband applications have stimulated interest in developing very highspeed wireless networks for short range communication, for example, the IEEE 802.1 In, the planned IEEE 802.11ac, and the planned IEEE 802.11ad WLAN specifications that are to provide a very high throughput in higher frequency bands. Applications of these IEEE 802.11 standards include products such as consumer electronics, telephones, personal computers, and access points for both for home and office.

According to an example embodiment, wireless local area networks (WLANs) typically operate in unlicensed bands. IEEE 802.11b and 802.11g WLANs have been a staple technology for traditional WLAN applications in the 2.4 GHz ISM band and have a nominal range of 100 meters. The IEEE 802.11 ah WLAN standard is being developed for operation in the 900 MHz ISM band and will have a greater range and lower obstruction losses due to its longer wavelength.

According to an example embodiment, an IEEE 802.11 WLAN may be organized as an independent basic service set (IBSS) or an infrastructure basic service set (BSS). The access point (AP) in an infrastructure basic service set (BSS) IEEE 802.11 WLAN network, may be a central hub that relays all communication between the mobile wireless devices (STAs) in an infrastructure BSS. If a STA in an infrastructure BSS wishes to communicate a frame of data to a second STA, the communication may take two hops. First, the originating STA may transfer the frame to the AP. Second, the AP may transfer the frame to the second STA. In an infrastructure BSS, the AP may transmit beacons or respond to probes received from STAs. After a possible authentication of a STA that may be conducted by the AP, an association may occur between the AP and a STA enabling data traffic to be exchanged with the AP. The Access Point (AP) in an Infrastructure BSS may bridge traffic out of the BSS onto a distribution network. STAs that are members of the BSS may exchange packets with the AP.

According to an example embodiment, the IEEE 802.11 WLAN may use two types of transmission: Distributed Coordination Function (DCF) and Point Coordination Function (PCF). DCF employs Carrier Sense Multiple Access with Collision Avoidance (CSMA/CA). A packet sent may be positively acknowledged by the receiver. A transmission may begin with a Request to Send (RTS) and the receiver may respond with a Clear to Send (CTS). The channel may be cleared by these two messages, since all STAs that hear at least one of the CTS and the CTS may suppress their own start of a transmission. The Request to Send (RTS) packet sent by the sender and the Clear to Send (CTS) packet sent in reply by the intended receiver, may alert all other devices within range of the sender or the receiver, to refrain from transmitting for the duration of the main packet.

According to an example embodiment, when data packets are transmitted, each may have a Network Allocation Vector (NAV) containing a duration value to reserve the channel for the sender and receiver for an interval after the current packet, equal to the NAV duration. The network allocation vector (NAV) is an indicator that may be maintained by each STA, of time periods when transmission onto the wireless medium will not be initiated by the STA whether or not the STA's physical carrier sensing function senses that the medium is busy. Use of the NAV for carrier sensing is called virtual carrier sensing. STAs receiving a valid frame may update their NAV with the information received in the duration field for all frames where the new NAV value is greater than the current NAV value, including the RTS and CTS packets, as well data packets. The value of the NAV decrements with the passage of time. Once the sender and receiver have reserved the channel, they may hold it for the remaining duration of the NAV value. The last acknowledgement packet (ACK) contains a NAV value of zero, to release the channel.

According to an example embodiment, standard spacing intervals are defined in the IEEE 802.11 specification, which delay a station's access to the medium, between the end of the last symbol of the previous frame and the beginning of the first symbol of the next frame. The short interframe space (SIFS), the shortest of the interframe spaces, may allow acknowledgement (ACK) frames and clear to send (CTS) frames to have access to the medium before others. The longer duration distributed coordination function (DCF) interframe space (IFS) or DIFS interval may be used for transmitting data frames and management frames.

According to an example embodiment, after the channel has been released, IEEE 802.11 wireless devices normally employ a spectrum sensing capability during the SIFS interval or DIFS interval, to detect whether the channel is busy. A carrier sensing scheme may be used wherein a node wishing to transmit data has to first listen to the channel for a predetermined amount of time to determine whether or not another node is transmitting on the channel within the wireless range. If the channel is sensed to be idle, then the node may be permitted to begin the transmission process. If the channel is sensed to be busy, then the node may delay its transmission for a random period of time called the backoff interval. In the DCF protocol used in IEEE 802.11 networks, the stations, on sensing a channel idle for DIFS interval, may enter the backoff phase with a random value between 0 and CWmin. The backoff counter may be decremented from this selected value as long as the channel is sensed idle.

According to an example embodiment, an algorithm, such as binary exponential backoff, may be used to randomly delay transmissions, in order to avoid collisions. The transmission may be delayed by an amount of time that is the product of the slot time and a pseudo random number. Initially, each sender may randomly wait 0 or 1 slot times. After a busy channel is detected, the senders may randomly wait between from 0 to 3 slot times. After the channel is detected to be busy a second time, the senders may randomly wait between from 0 to 7 slot times, and so forth. As the number of transmission attempts increases, the number of random possibilities for delay increases exponentially. An alternate backoff algorithm is the truncated binary exponential backoff, wherein after a certain number of increases, the transmission timeout reaches a ceiling and thereafter does not increase any further.

According to an example embodiment, it may also be possible to start data transmission directly without RTS-CTS signaling and in that case, the first packet carries information similar to the RTS to start protection.

According to an example embodiment, an IEEE 802.11 WLAN may also be organized as an independent basic service set (IBSS). Wireless devices in an independent basic service set (IBSS) communicate directly with one another and there is no access point in the IBSS. WLAN ad hoc networks have an independent configuration where the mobile devices communicate directly with one another, without support from a fixed access point. WLAN ad hoc networks support distributed activities similar those of the Bluetooth^{™} piconets. The IEEE 802.11 standard provides wireless devices with service inquiry features similar to the Bluetooth^{™} inquiry and scanning features.

The independent basic service set (IBSS) has a BSS Identifier (BSSID) that is a unique identifier for the particular ad hoc network. Its format may be identical to that of an IEEE 48-bit address. In an ad hoc network, the BSSID may be a locally administered, individual address that is generated randomly by the device that starts the ad hoc network.

Synchronization is the process of the devices in an ad hoc network getting in step with each other, so that reliable communication is possible. The MAC may provide the synchronization mechanism to allow support of physical layers that make use of frequency hopping or other time-based mechanisms where the parameters of the physical layer change with time. The process may involve beaconing to announce the presence of an ad hoc network, and inquiring to find an ad hoc network. Once an ad hoc network is found, a device may join the ad hoc network. This process may be entirely distributed in ad hoc networks, and may rely on a common time base provided by a timer synchronization function (TSF). The TSF may maintain a 64-bit timer running at 1 MHz and updated by information from other devices. When a device begins operation, it may reset the timer to zero. The timer may be updated by information received in beacon frames.

Since there is no AP, the mobile device that starts the ad hoc network may begin by resetting its TSF timer to zero and transmitting a beacon, choosing a beacon period. This establishes the basic beaconing process for this ad hoc network. After the ad hoc network has been established, each device in the ad hoc network will attempt to send a beacon after the target beacon transmission time (TGTT) arrives. To minimize actual collisions of the transmitted beacon frames on the medium, each device in the ad hoc network may choose a random delay value which it may allow to expire before it attempts its beacon transmission.

Once a device has performed an inquiry that results in one or more ad hoc network descriptions, the device may choose to join one of the ad hoc networks. The joining process may be a purely local process that occurs entirely internal to the mobile device. There may be no indication to the outside world that a device has joined a particular ad hoc network. Joining an ad hoc network may require that all of the mobile device's MAC and physical parameters be synchronized with the desired ad hoc network. To do this, the device may update its timer with the value of the timer from the ad hoc network description, modified by adding the time elapsed since the description was acquired. This will synchronize the timer to the ad hoc network. The BSSID of the ad hoc network may be adopted, as well as the parameters in the capability information field. Once this process is complete, the mobile device has joined the ad hoc network and is ready to begin communicating with the devices in the ad hoc network.

The access point (AP) in legacy IEEE 802.11 Wireless LAN networks must relay all communication between the mobile wireless devices (STAs) in an infrastructure BSS. If a STA in an infrastructure BSS wishes to communicate a frame of data to a second STA, the communication must take two hops. First, the originating STA transfers the frame to the AP. Second, the AP transfers the frame to the second STA.

The access point (AP) in an infrastructure BSS assists those mobile wireless devices (STAs) attempting to save power. In power save mode, IEEE 802.11 mobile wireless devices shut down their radio transceiver and sleep periodically to increase their battery life. During sleeping periods in an infrastructure network, access points buffer any unicast frames that are addressed to those mobile wireless devices in the sleep state. The buffering of such frames addressed to a sleeping mobile wireless device is announced by subsequent beacon frames broadcast by the access point. The beacon frame includes a Traffic Indication Map (TIM). The mobile wireless device periodically wakes up to power-on its receiver to listen for beacons with the TIM indicating its buffer status in the access point. The mobile wireless device may then power-on its transmitter to transmit power save polling (PS-Poll) frames to the access point after being informed that there are buffered frames addressed to it.

To retrieve the buffered frames, a newly awakened mobile wireless device uses PS-Poll frames. The PS-Poll frame contains the ID of the mobile wireless device to enable the access point to determine which waiting frames have been buffered for the mobile wireless device. If the mobile wireless device fails to check for waiting frames after each listen interval, the waiting frames may be discarded without notification.

After being polled, the access point may respond immediately to the PS-Poll frame or it may otherwise be busy and decide to respond with a simple acknowledgement (ACK) frame. However, the mobile wireless device that sent the PS-Poll frame must remain awake until all of its buffered frames have been delivered by the access point. The mobile wireless device must stay awake until the next beacon frame is received from the access point in which its bit in the Traffic Indication Map (TIM) is clear. After that, the mobile wireless device may return to the sleep state.

The legacy IEEE 802.11e Wireless LAN standards provides for support of low power operation in handheld and battery operated STAs, called automatic power save delivery (APSD). A STA capable of APSD and currently in the power saving mode, will wake up at predetermined beacons received from the AP to listen to a Traffic Indication Map (TIM). If existence of buffered traffic waiting to be sent to the STA is signaled through the TIM, the STA will remain awake until AP sends out all the data. The STA does not need to send a polling signal to the AP to retrieve data, which is the reason for the term "automatic" in the acronym APSD.

Two variations of the APSD feature are unscheduled automatic power save delivery (U-APSD) and scheduled automatic power save delivery (S-APSD). In U-APSD, the access point (AP) is always awake and hence a mobile wireless device (STA) in the power save mode may send a trigger frame to the AP when the STA wakes up, to retrieve any queued data at the AP and also transmit any data queued from the STA to the AP. In S-APSD, the AP assigns a schedule to a STA and the STA wakes up at the assigned time to retrieve from the AP any data queued for the STA. An AP may maintain multiple schedules either with the same STA or with different STAs in the infrastructure BSS network. Since the AP is never in sleep mode, an AP will maintain different scheduled periods of transmission with different STAs in the infrastructure BSS network to ensure that the STAs get the maximum power savings.

### B. Coexistence-Aware Communication Mechanism for Multi-Radios

When multiple radio systems in a handheld wireless device operate concurrently using close or overlapping frequencies, it is likely that the radio systems interfere with each other. This intra-device interference is due to crosstalk and non-linearity of RF processing, referred commonly as in-device interference. This is a well-known problem with the current smart phone technology.

The primary effect of intra-device interference is receiver desensitization, wherein when one radio system transmits, the produced interference is received as noise in the receiver of the victim radio system. This noise lowers the signal-to-noise ratio (SNR). The lowered SNR deteriorates reception, and therefore, lower throughputs are attained. In extreme cases, the reception may be impossible due to the interference.

Intra-device interference may be mitigated by improved design of RF circuitry, especially with improved reception (RX) and transmission (TX) filter design. However, for very close frequency bands, this is currently difficult or prohibitively expensive. The other mitigation option is to negotiate bands that are further away from each other. However, band negotiation is not always feasible either, as there might either not be those bands available or the negotiation might produce a suboptimal network balancing situation, where certain bands are heavily congested while others are mostly idle.

An example of intra-device interference is the scenario where a smart phone uses both Long Term Evolution (LTE) and WLAN concurrently (data off-loading, for example). In this scenario, the LTE radio operates on band 40 (2300-2400 MHz) and the WLAN radio on channel 1 (2402-2422 MHz). LTE band 40 is estimated to be a popular frequency band in global scale. As WLAN channel 1 is also a common configuration option, this scenario may not be considered as a marginal case. Due to the proximity of these frequency bands, improved physical design alone may not be sufficient. A band-pass filter that would pass 2300-2400 MHz with less than 3dB attenuation and block 2402-2484 MHz by 40 dB or more would probably not fit into a handheld device and it would probably have a prohibitive cost factor.

In the LTE-WLAN coexistence cases, the LTE radio system may generally be considered to be of higher priority than the WLAN radio system. This is to say that LTE transmissions are not blocked by WLAN receptions, and LTE reception will block simultaneous WLAN transmissions, if the WLAN transmission would desensitize the LTE receiver. The LTE transmissions and receptions are not usually continuous, but instead, contain periods of activity and inactivity. Given certain conditions, the inactivity periods may be predicted in advance.

The predicted LTE-inactivity periods present interference-free periods for WLAN communication. When the WLAN station is in power save mode, the WLAN station initiates all data transfers with the access point, both sending and receiving data. This is possible as the access point buffers all incoming data until explicitly dequeued. The power save mode thus enables station-oriented traffic scheduling to LTE-inactivity periods. PS-Poll and U-APSD are the currently standardized mechanisms to dequeue the buffered data from the access point.

However, the duration of PS-Poll and U-APSD transactions may be unbounded. Usually, the transactions are short (in order of milliseconds), but there is no guarantee. Once the station has initiated fetch, it may be supposed to receive until the access point replies with data that closes the transaction. If the interference-free period ends before the transaction is closed, the transaction may be lost and the WLAN network performance may degrade as the access point may keep unsuccessfully retrying with lower bitrates.

In accordance with an example embodiment of the invention, an extension to the WLAN standard improves coexistence with other radios in a multi-radio device. An example embodiment of the invention, referred to herein as coexistence-aware delivery, enables reliable and efficient exploitation of interference-free periods for delivery of incoming data.

In accordance with an example embodiment of the invention, a new delivery process includes a deadline. When the delivery process is started, the access point may send as many buffered frames as it is able before the deadline. The delivery uses regular WLAN frame transmission procedures, such as contention. When the deadline is set to the end of the interference-free period, the access point will not transmit during the time when the station experiences in-device interference.

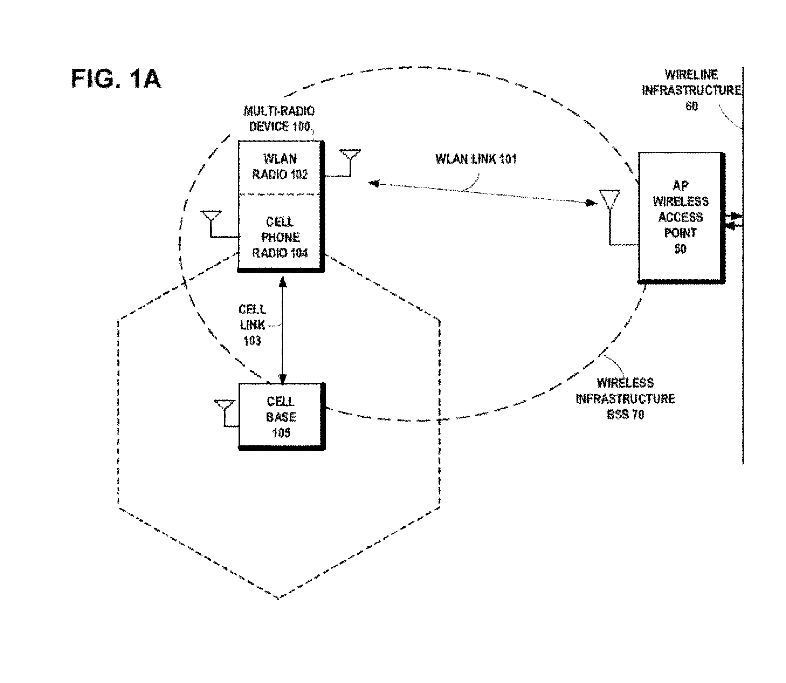

Figure 1A is an example network diagram of a wireless network, with a multi-radio device 100 having both a WLAN radio 102 and a cellular telephone radio 104 in communication with both a WLAN access point 50 over a WLAN link 101 in a wireless infrastructure BSS 70 and a cellular telephone base station 105 over a cellular telephone link 103, according to an example embodiment of the invention. The WLAN access point 50 may be connected to a wireline infrastructure 60.

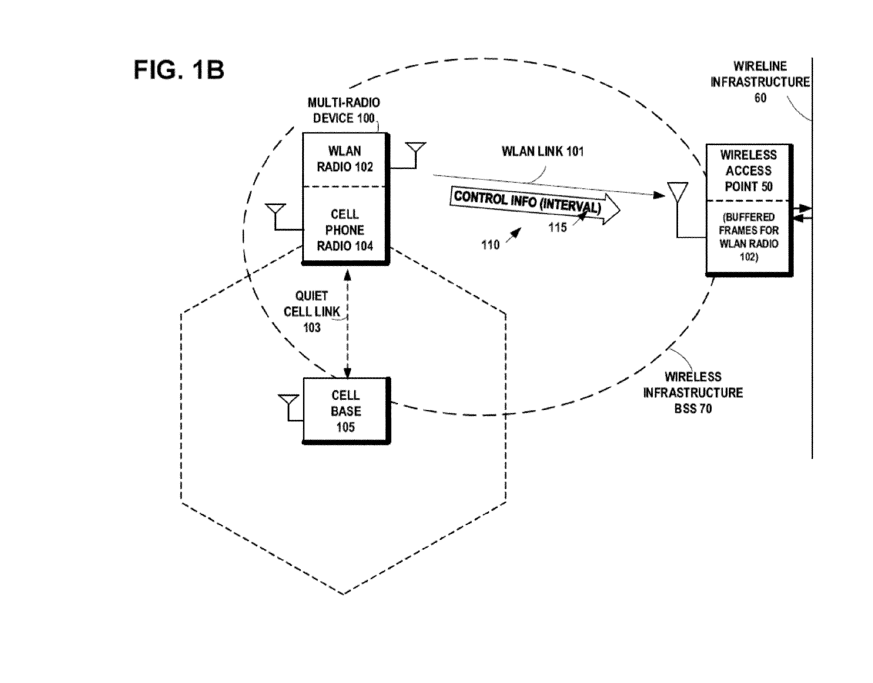

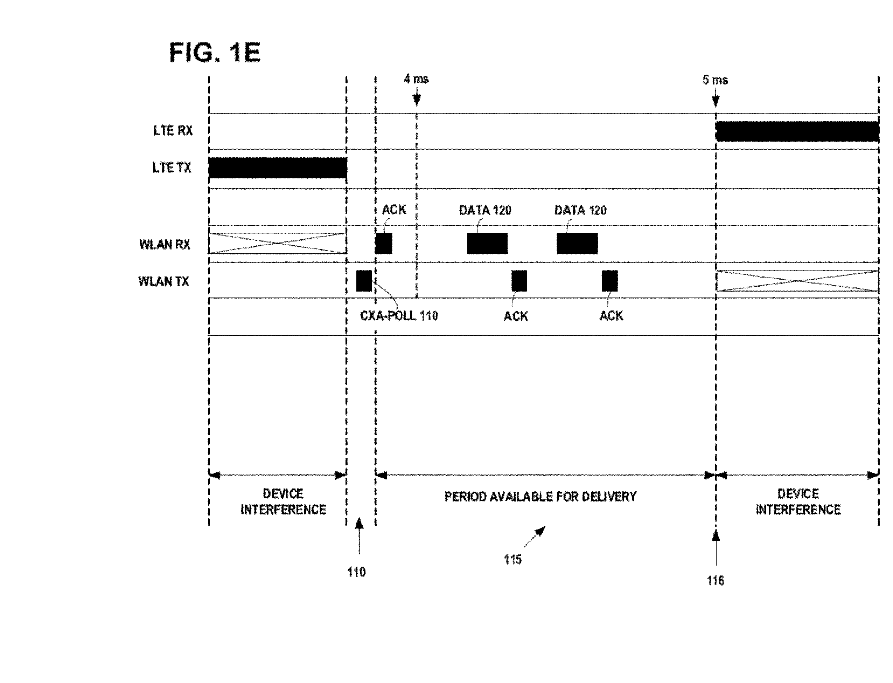

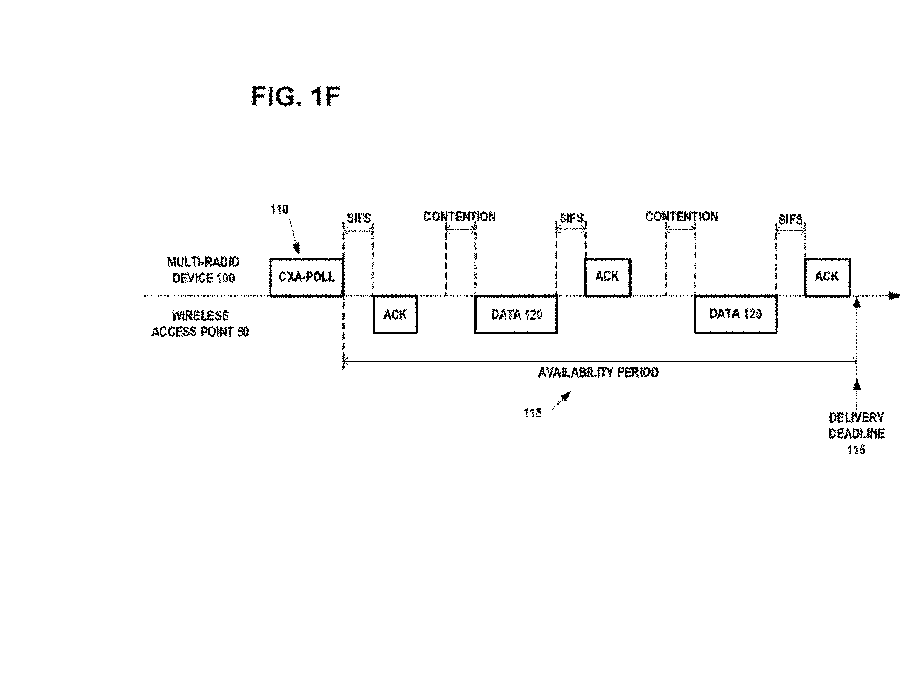

Figure 1B shows the example network diagram of Figure 1A, wherein the multi-radio device 100 has determined for the cellular telephone radio 104 of the multi-radio device, a next instant of activity. The WLAN radio 102 of the multi-radio device is shown transmitting to the WLAN access point device 50, control information 110 including a value for a quiet interval or interference-free period 115 to occur before the next instant 116 of activity by the cellular telephone radio 104, according to an example embodiment of the invention. The next instant 116 of activity by the cellular telephone radio 104 is shown in Figures 1E and 1F. In an example embodiment of the invention, the control information 110 may be included in a coexistence-aware poll (CXA-Poll) frame. The CXA-Poll frame may include the same information as in a PS-Poll frame, and additionally, the control information 110 with a field called deadline duration or interval 115. The deadline duration or interval 115 is the duration after the transmission of the CXA-Poll frame until the delivery deadline 116 occurs. CXA-Poll frame with the control information 110 may be considered as a promise to be able to receive and transmit until the delivery deadline occurs. In an example embodiment of the invention, the interval 115 to occur before the next instant 116 of activity by the radio 104, may be an interference-free period, a quiet interval of the radio 104 in the multi-radio device, a sleep interval of the radio 104 in the multi-radio device, a communication opportunity, or a communication window.

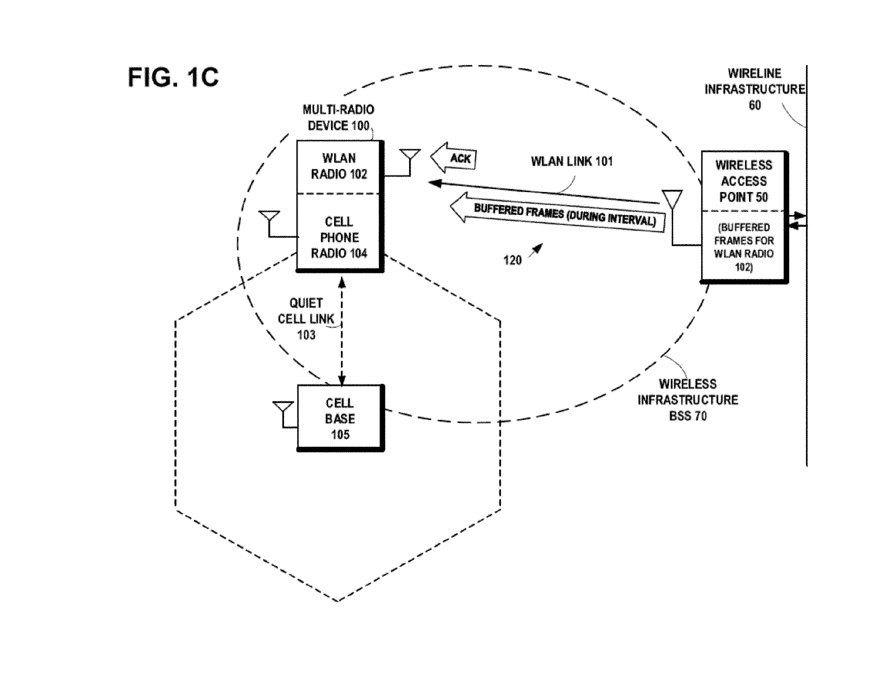

Figure 1C shows the example network diagram of Figure 1A, wherein the WLAN radio 102 of the multi-radio device 100 exchanges wireless signals 120 with the WLAN access point device 50 only during the quiet interval or interference-free period of the cellular telephone radio 104 of the multi-radio device 100. The wireless signals 120 transmitted by the access point 50 to the WLAN radio 102 may include the buffered frames that were buffered in the access point 50. The access point device 50 may acknowledge with an ACK frame, the CXA-Poll frame containing the control information 110, as it does with a PS-Poll frame (deferred response) or with an U-APSD trigger frame.

In an example embodiment of the invention, after sending the acknowledgement ACK frame, the access point device 50 starts sending buffered frames 120, as in the U-APSD procedures, with the modification that a data frame may be sent only if the data frame and the corresponding acknowledgement frame fit before the delivery deadline 116 occurs, as shown in Figures 1E and 1F.

The access point 50 transmits to the WLAN radio buffered frames 120 that it has previously buffered for the WLAN radio 102 during a previous period when the cellular telephone radio 104 of the multi-radio device 100 was active, in response to the control information 110, according to an example embodiment of the invention.

The delivery process may end before the deadline 116, if the access point device 50 sends a data frame with the more-data field equal to zero, in accord with the U-APSD process.

If there are no data frames buffered in the access point device 50 when the delivery process is initiated, the access point device 50 may send a Null-data frame with the more-data field equal to zero. This may enable the multi-radio device 100 to opportunistically probe the buffer status in the access point device 50 in case of missed beacons.

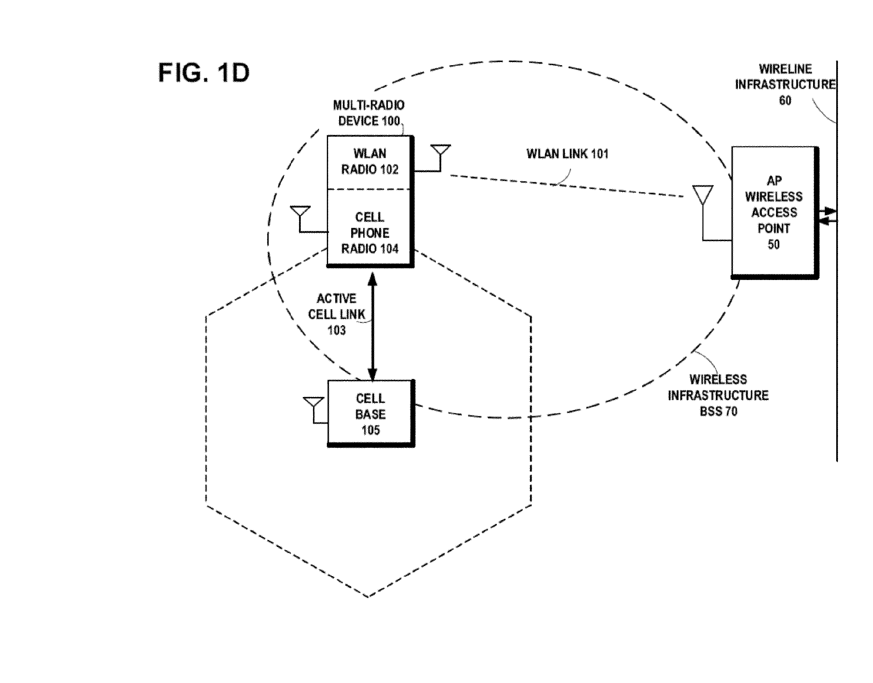

Figure 1D shows the example network diagram of Figure 1A, wherein the WLAN access point device 50 ceases to transmit wireless signals 120 to the WLAN radio 102 of the multi-radio device 100 following the termination of the quiet interval or interference-free period 115 of the cellular telephone radio 104 of the multi-radio device 100, the WLAN access point 50 buffering wireless signals for the WLAN radio 102 during the following period of activity of the cellular telephone radio 104, in response to the control information 110, according to an example embodiment of the invention.

The multi-radio device 100 has the freedom to schedule transmitted data frames to interference-free periods. As the multi-radio device 100 knows the data rate (i.e., MCS) of the sent frames, it may estimate precisely the data frame + ACK transaction duration after the contention is won. Thus, utilizing predictable interference-free periods for transmitted data may be done efficiently with the current WLAN standard. If the transaction does not fit in the interference- free period, it may be postponed until the next interference-free period. In an example embodiment of the invention, the transaction may be divided into smaller fragments so that the first fragment fits in the interference-free period.

To use interference-free periods for data reception, the WLAN radio 102 may use access point 50 (AP)-buffered delivery mechanisms. Without buffering, the data may spontaneously occur during interference. Buffering is provided in power-save mode. However, the duration of buffered data delivery (PS-Poll or U-APSD) may not be reliably estimated and the delivery duration may vary, especially with U-APSD. With PS-Poll, small interference-free periods may not be used, as there is no guarantee that the data transaction (PS-Poll-ACK-AP processing-delay-contention-data-ACK) will fit in the interference-free period. The smallest practically usable interference-free period may be probably 3-5 ms.

Long Term Evolution (LTE) specifications also have a Discontinuous Reception (DRX) mode that may be used for user equipment power saving, or to facilitate coexistence for multi-radio devices 100. The cellular base station 105 may schedule the cellular user equipment radio 104 so that relatively long inactive periods are achieved (e.g., in the order of tens of milliseconds). The non-deterministic data reception duration of PS-Poll and U-APSD means that these interference-free periods may be inefficiently used. Consider that there may be a 20 ms interference-free period. If a 5 ms guard period is used, new PS-Poll transactions may be initiated only during the first 15 ms of the interference-free period. It may be likely that the last few milliseconds will remain idle. U-APSD transaction probably cannot be initiated safely even with the relatively long 20 ms interference-free period.

The term "DRX smart scheduling" refers to the suggested co-existence mechanism that uses the existing discontinuous reception (DRX) function in LTE networks. The idea is that when the user equipment (UE) detects the coexistence problem, it may suggest some DRX pattern to eNodeB base station to make interference-free periods for second radio. In an example embodiment of the invention, eNodeB may also detect a coexistence problem for the user equipment (UE) and act accordingly without the UE's requests.. The DRX pattern consists of a scheduled period and an unscheduled period. During the scheduled period, user equipment (UE) needs to receive the LTE signal and decode downlink control channel (PDCCH) to find message for it. During the unscheduled period, eNB does not schedule downlink traffic or grant new uplink traffic, so the unscheduled period may be used for interfering second radio. Smart scheduling is that eNodeB tries to arrange unscheduled periods into DRX cycles so that interference-free periods are provided for a second radio. In an example embodiment of the invention, eNodeB may grant new uplink HARQ processes, which the user equipment (UE) may use to transmit data.

The difficulty with DRX smart scheduling is that Hybrid Automatic Repeat Request (HARQ) retransmissions tend to extend the "activity time" in an unpredictable way. DRX is originally made for user equipment (UE) power saving, not for co-existence, so the current DRX specification handles this "retransmission tail" by forcing UE to continue listening for and sending retransmissions and acknowledgements until all HARQ processes are terminated. The UE may be required to both listen to downlink (DL) retries and uplink (UL) ACKs, and to send UL retries and DL ACKs.

In IEEE 802.1 In, delivery of buffered frames in power save mode may be initiated by a PS-Poll frame or a U-APSD trigger frame. A PS-Poll frame fetches single buffered frame and the U-APSD process fetches multiple frames. The latter is more efficient, when there are multiple buffered data frames, as less signaling frames need to be exchanged per data frame. A PS-Poll frame may be considered as a promise to receive until a data frame is received. An initiated U-APSD process may be considered as a promise to receive until the access point signals that no more frames are sent.

In an example embodiment of the invention, the delivery process is initiated with a CXA-Poll frame (coexistence-aware poll). The CXA-Poll frame includes the same information with the PS-Poll frame, and additionally, a field called Deadline Duration. Deadline Duration is the duration after the CXA-Poll frame until the delivery deadline.

The access point 50 acknowledges the CXA-Poll frame, as it does with the PS-Poll frame (deferred response) or with the U-APSD trigger frame. After that, the access point 50 may start sending buffered frames as in the U-APSD procedures with the following modification: a data frame may be sent only if the data frame and the corresponding acknowledgement frame (using the most robust MCS 0) fit before the delivery deadline. The delivery process may end before the deadline, if the access point 50 sends a data frame with more-data=0. This is in accord with the U-APSD process.

If there are no data frames buffered in the access point 50 when the delivery process may be initiated, the access point 50 should send a Null-data frame with more-data=0. This enables the multi-radio device 100 to opportunistically probe the buffer status in case of missed beacons. Such behavior is currently unspecified at least for PS-Poll.

CXA-Poll may be considered as a promise to be able to receive and transmit until deadline.

Figure 1E illustrates an example of traffic interleaving in a multi-radio device 100 having both a WLAN radio 102 and a Long Term Evolution (LTE) cellular telephone radio 104, during hard interference conditions, according to an example embodiment of the invention. A hard interference condition refers to the situation, where the LTE transmitter (LTE TX) interferes with the WLAN receiver (WLAN RX), and the WLAN transmitter (WLAN TX) interferes with the LTE receiver (LTE RX). If the LTE communication is prioritized over the WLAN communication, then the WLAN transmitter (WLAN TX) may not transmit when the LTE receiver (LTE RX) is receiving, and also the WLAN receiver (WLAN RX) may not receive when the WLAN transmitter (WLAN TX) is transmitting. Therefore, the WLAN radio must adapt to the interference-free periods that occur when the LTE radio is inactive. The adaptation is provided by the coexistence-aware poll (CXA-Poll) frame 110 that starts the delivery of buffered frames 120. The CXA-Poll frame 110 contains the quiet interval 115 and/or the deadline 116 for the delivery of buffered frames 120. The interval 115 between the end of the CXA-Poll frame 110 and the deadline 116 is the period available for delivery of buffered frames 120. The buffered data frames 120 from the access point 50 and the accompanying ACK frames must fit completely within the availability period 115. The crosshatching shown in the figure for WLAN RX during the first occurring device interference period and shown in the figure for WLAN TX during the second occurring device interference period, denotes the times during which the lower priority WLAN radio 102 is prohibited from transmitting, according to an example embodiment of the invention. The black bars shown in the figure for LTE TX during the first occurring device interference period and shown in the figure for LTE RX during the second occurring device interference period, denote the times during which the Long Term Evolution (LTE) cellular telephone radio 104 is respectively transmitting or receiving.

Figure 1F illustrates an example timing related to CXA-Poll, according to an example embodiment of the invention. The CXA-Poll frame 110 contains the quiet interval 115 and/or the deadline 116 for delivery of buffered frames 120. During the availability period 115, the access point 50 sends buffered data frames 120 to the WLAN radio 102. The delivery process terminates when the buffer in the access point 50 is empty or when the delivery deadline 116 becomes imminent, according to an example embodiment of the invention..

Figure 2A is an example functional block diagram, illustrating an example multi-radio device 100 having both a WLAN radio 102 and a cellular telephone radio 104, according to an example embodiment of the invention.

The example multi-radio device 100 may include a processor 134 that may include a dual or multi-core central processing unit CPU_1 and CPU_2, a RAM memory, a ROM memory, and an interface for a keypad, display, and other input/output devices.

The example WLAN radio 102 may include a protocol stack, including the transceiver 128 and IEEE 802.11 MAC 142, which may be based, for example, on the IEEE 802.11 WLAN standard. The protocol stack may also include a network layer 140, a transport layer 138, and an application program 136.

The example cellular telephone radio 104 may include a protocol stack, including the transceiver 128' and cellular telephone MAC 142', which may be based, for example, on the Long Term Evolution (LTE) standard. The protocol stack may also include a network layer 140', a transport layer 138', coupled to the application program 136.

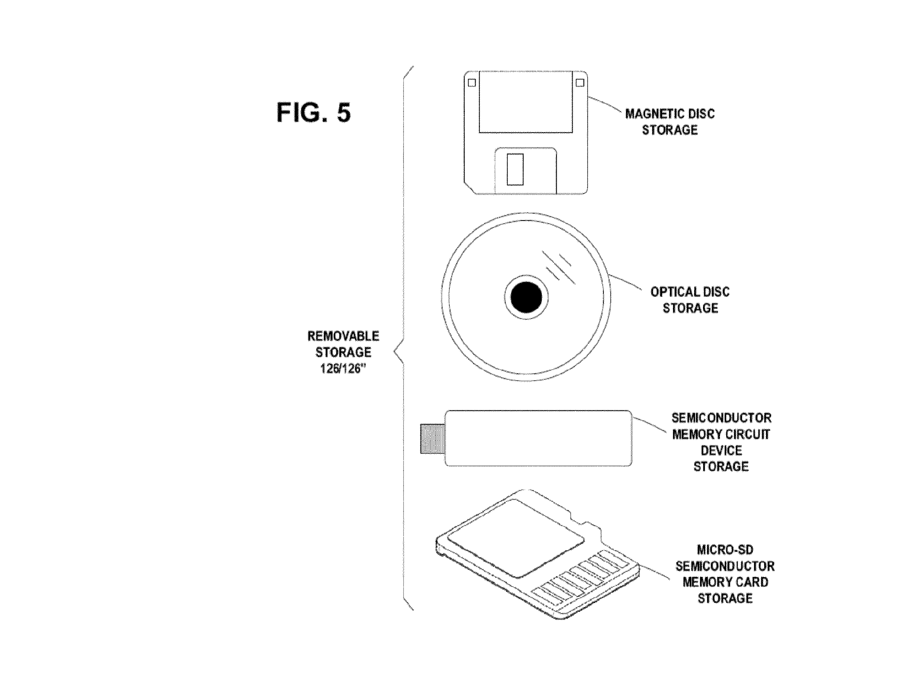

In an example embodiment, the interface circuits in Figure 2A may interface with one or more radio transceivers, battery and other power sources, key pad, touch screen, display, microphone, speakers, ear pieces, camera or other imaging devices, etc. The RAM and ROM may be removable memory devices such as smart cards, SIMs, WIMs, semiconductor memories such as RAM, ROM, PROMS, flash memory devices, etc. The processor protocol stack layers, and/or application program may be embodied as program logic stored in the RAM and/or ROM in the form of sequences of programmed instructions which, when executed in the CPU, carry out the functions of example embodiments. The program logic may be delivered to the writeable RAM, PROMS, flash memory devices, etc. from a computer program product or article of manufacture in the form of computer-usable media such as resident memory devices, smart cards or other removable memory devices. Alternately, they may be embodied as integrated circuit logic in the form of programmed logic arrays or custom designed application specific integrated circuits (ASIC). The one or more radios in the device may be separate transceiver circuits or alternately, the one or more radios may be a single RF module capable of handling one or multiple channels in a high speed, time and frequency multiplexed manner in response to the processor. An example of removable storage media 126, as shown in Figure 5, may be based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with at least one embodiment of the present invention.

Figure 2B is an example flow diagram of operational procedures in the multi-radio device of Figure 2A, wherein the multi-radio device determines a next instant of activity for the cellular telephone radio, transmits to the WLAN access point device, control information including a value for a quiet interval to occur before the next instant of activity by the cellular telephone radio, and exchanges wireless signals with the WLAN access point device only during the quiet interval of the cellular telephone radio of the multi-radio device, in response to the control information, according to an example embodiment of the invention.

The procedures of the flow diagram 200 of Figure 2B may represent computer code instructions stored in the RAM and/or ROM memory of the device, which when executed by the central processing units (CPU), carry out the functions of an example embodiment of the invention. The procedures may be carried out in another order than shown and individual procedures may be combined or separated into component procedures.
Procedure 202: determining for a first radio in a multi-radio device, a next instant of activity;
Procedure 204: transmitting by a second radio in the multi-radio device, to another wireless device, control information including a duration value for an interval to occur before a next instant of activity by the first radio, during which interval wireless communication between the second radio of the multi-radio device and the another wireless device must be completed; and
Procedure 206: entering by the second radio in the multi-radio device, a power save state by end of the interval.

In an example embodiment of the invention, the processor 134 in the multi-radio device 100 of Figure 2A, executing example programmed instructions represented in the example flow diagram of Figure 2C, determines for the cell phone radio 104 in the multi-radio device, a next instant 116 of activity. The processor 134 generates control information 110 for the WLAN radio 102 radio in the multi-radio device, including a duration value for an interval 115 to occur before a next instant 116 of activity by the cell phone radio 104, during which interval 115 wireless communication between the WLAN radio 102 of the multi-radio device and the wireless access point device 50 must be completed. The processor 134 causes the WLAN radio 102 in the multi-radio device, to transmit the control information 110 to the wireless access point device 50. The processor 134 causes the WLAN radio 102 in the multi-radio device, to enter a power save state by end of the interval 115, in response to the control information 110, according to an example embodiment of the invention.

Figure 2C is an example flow diagram of operational procedures in the multi-radio device of Figure 2A, wherein the multi-radio device determines for a first radio in a multi-radio device, a next instant of activity; generates control information for a second radio in the multi-radio device, including a duration value for an interval to occur before a next instant of activity by the first radio, during which interval wireless communication between the second radio of the multi-radio device and another wireless device must be completed; causes the second radio in the multi-radio device, to transmit the control information to the another wireless device; and causes the second radio in the multi-radio device, to enter a power save state by end of the interval, in response to the control information, according to an example embodiment of the invention.

The procedures of the flow diagram 250 of Figure 2C may represent computer code instructions stored in the RAM and/or ROM memory of the device, which when executed by the central processing units (CPU), carry out the functions of an example embodiment of the invention. The procedures may be carried out in another order than shown and individual procedures may be combined or separated into component procedures.
Procedure 252: determining for a first radio in a multi-radio device, a next instant of activity;
Procedure 254: generating control information for a second radio in the multi-radio device, including a duration value for an interval to occur before a next instant of activity by the first radio, during which interval wireless communication between the second radio of the multi-radio device and another wireless device must be completed;
Procedure 256: causing the second radio in the multi-radio device, to transmit the control information to the another wireless device; and
Procedure 258: causing the second radio in the multi-radio device, to enter a power save state by end of the interval.

Figure 3A is an example functional block diagram, illustrating an example WLAN access point device 50, according to an example embodiment of the invention. The example WLAN access point device 50 may include a processor 134" that may include a dual or multi-core central processing unit CPU_1 and CPU_2, a RAM memory, a ROM memory, and an interface for a keypad, display, and other input/output devices. Processor 134" executes program code instructions in the RAM and/or ROM memory to manage communications within the wireless network 70 including scheduling communications with WLAN radio 102 of the multi-radio device to occur during the interval 115.

The example WLAN access point device 50 may include a protocol stack, including the transceiver 128" and IEEE 802.11 MAC 142", which may be based, for example, on the IEEE 802.11 WLAN standard. The protocol stack may also include a network layer 140", a transport layer 138", and an application program 136".

In an example embodiment, the interface circuits in Figure 3A may interface with one or more radio transceivers, battery and other power sources, key pad, touch screen, display, microphone, speakers, ear pieces, camera or other imaging devices, etc. The RAM and ROM may be removable memory devices such as smart cards, SIMs, WIMs, semiconductor memories such as RAM, ROM, PROMS, flash memory devices, etc. The processor protocol stack layers, and/or application program may be embodied as program logic stored in the RAM and/or ROM in the form of sequences of programmed instructions which, when executed in the CPU, carry out the functions of example embodiments. The program logic may be delivered to the writeable RAM, PROMS, flash memory devices, etc. from a computer program product or article of manufacture in the form of computer-usable media such as resident memory devices, smart cards or other removable memory devices. Alternately, they may be embodied as integrated circuit logic in the form of programmed logic arrays or custom designed application specific integrated circuits (ASIC). The one or more radios in the device may be separate transceiver circuits or alternately, the one or more radios may be a single RF module capable of handling one or multiple channels in a high speed, time and frequency multiplexed manner in response to the processor. An example of removable storage media 126", as shown in Figure 5, may be based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with at least one embodiment of the present invention.

Figure 3B is an example flow diagram of operational procedures in the WLAN access point device 50 of Figure 3A, wherein the access point schedules for transmission to the WLAN radio 102, wireless signals 120 that it has previously buffered for the WLAN radio during a previous period when the cellular telephone radio 104 of the multi-radio device was active, in response to the control information 110. The WLAN access point device 50 may also schedule receiving wireless signals from the WLAN radio 102, in response to the control information 110. The WLAN access point 50 may schedule ceasing to transmit wireless signals to the WLAN radio 102 of the multi-radio device following the termination of the quiet interval of the cellular telephone radio 104 of the multi-radio device, the WLAN access point 50 buffering wireless signals for the WLAN radio 102 during the following period of activity of the cellular telephone radio, in response to the control information, according to an example embodiment of the invention.

The procedures of the flow diagram 300 of Figure 3B may represent computer code instructions stored in the RAM and/or ROM memory, which when executed by the central processing units (CPU), carry out the functions of an example embodiment of the invention. The procedures may be carried out in another order than shown and individual procedures may be combined or separated into component procedures.
Procedure 302: receiving, by a wireless device in a wireless network, control information including a duration value for an interval during which interval wireless communication with a source device of the control information must be completed; and
Procedure 304: managing communications within the wireless network including scheduling communications with the source device of the control information to occur during the interval.

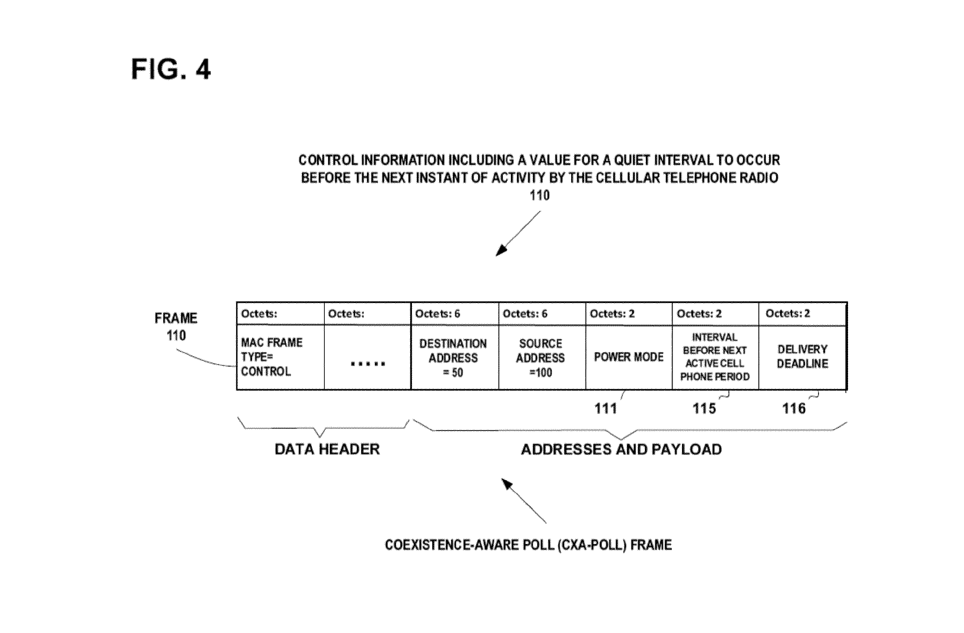

Figure 4 is an example frame structure of an IEEE 802.11 modified packet frame 110 transmitted from the WLAN radio 102 to the WLAN access point 50, containing the control information including a value for a quiet interval or interference-free period to occur before the next instant of activity by the cellular telephone radio 104, according to an example embodiment of the invention. The payload portion of the packet frame may include the control information 110 that may include a power mode field 111, a field for the value of the quiet interval or interference free period 115, and/or a field for the delivery deadline 116. The control information 110 may be included in a coexistence-aware poll (CXA-Poll) frame. In an example embodiment of the invention, the end of the quiet interval (115) may be equal to the delivery deadline (116). In another example embodiment of the invention, the delivery deadline (116) may not be equal to the end of the interference-free period.

Figure 5 illustrates an example embodiment of the invention, wherein examples of removable storage media 126/126" are shown, based on magnetic, electronic and/or optical technologies, such as magnetic disks, optical disks, semiconductor memory circuit devices and micro-SD memory cards (SD refers to the Secure Digital standard) for storing data and/or computer program code as an example computer program product, in accordance with at least one embodiment of the present invention.

In an example embodiment of the invention, an example coexistence scenario is Long Term Evolution (LTE) cellular telephone radio 104 uplink (UE) on band 40 and WLAN radio 102 on 2.4-GHz ISM band, where the transmitters of each radio interferes with the receiver of the other. This is the hard in-device coexistence (IDC) scenario. In an example embodiment of the invention, the LTE radio 104 may have higher priority than the WLAN radio 102, which means that (1) WLAN radio 102 may avoid receiving whenever LTE radio 104 is transmitting, and (2) WLAN radio 102 may avoid transmitting whenever LTE radio 104 is receiving. As WLAN frame exchanges usually require the receiver and the transmitter to operate in close succession (Contention+DATA+ACK, etc), rules (1) and (2) may be combined as: WLAN radio 102 may be inactive whenever LTE radio 104 is active.

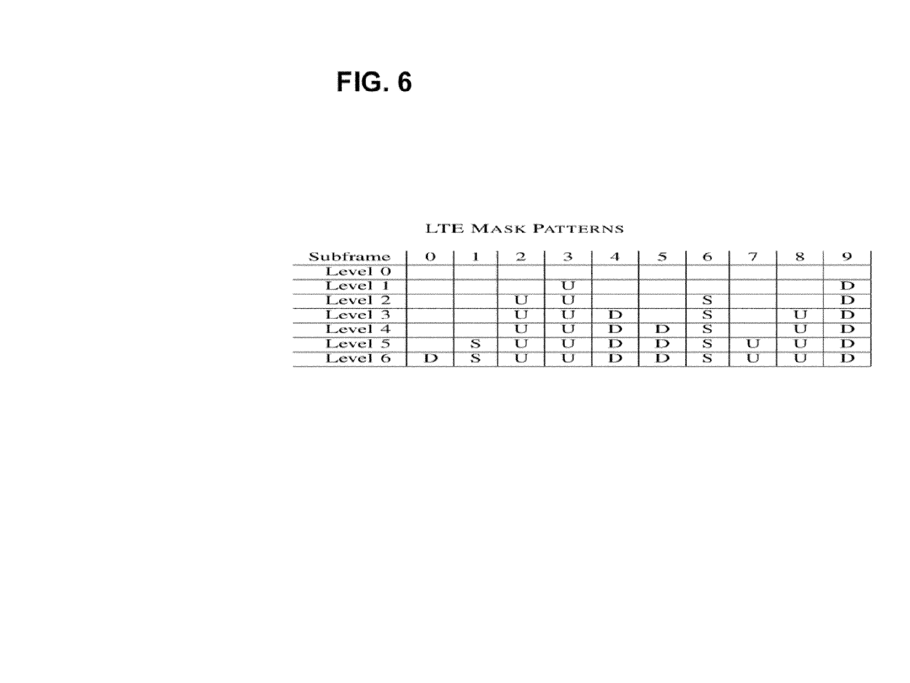

In an example embodiment of the invention, in the hard in-device coexistence (IDC) scenario, the LTE radio 104 inactivity periods may be the interference-free periods for WLAN radio 102. In 3rd Generation Partnership Project (3GPP) operation of the LTE radio 104, two main mechanisms may provide predictable interference-free periods for the WLAN radio 102:
1. In the first 3GPP mechanism, Uplink (UL)-Hybrid Automatic Repeat Request (HARQ) masks and downlink (DL)-HARQ scheduling patterns of the LTE radio 104 may provide interference-free periods. This mechanism may provide short (usually 1-3 ms) interference-free periods. The periods occur in a cyclic pattern. Figure 6 shows an example of progressive UL/DL patterns of the LTE radio 104 for time domain duplex (TDD) configuration 1. The pattern length may depend on the frame configuration used. LTE frame configuration may be one of at least frequency division duplex (FDD), half-duplex FDD, or one of the many TDD configurations.

Figure 6 is an example of LTE mask patterns showing progressive down link (DL)/uplink (UL) mask patterns for time division duplex (TDD) in the first 3GPP mechanism of the LTE radio 104, according to an example embodiment of the invention. The pattern is repetitive with a subframe duration of 1 ms. "U" means an uplink slot, "D" means a downlink slot, and "S" means a downlink slot with special timing (used for DL-to-UL switchover). The empty slots are inactive slots, which provide interference-free periods for WLAN radio 102 in the hard in-device coexistence (IDC) scenario.

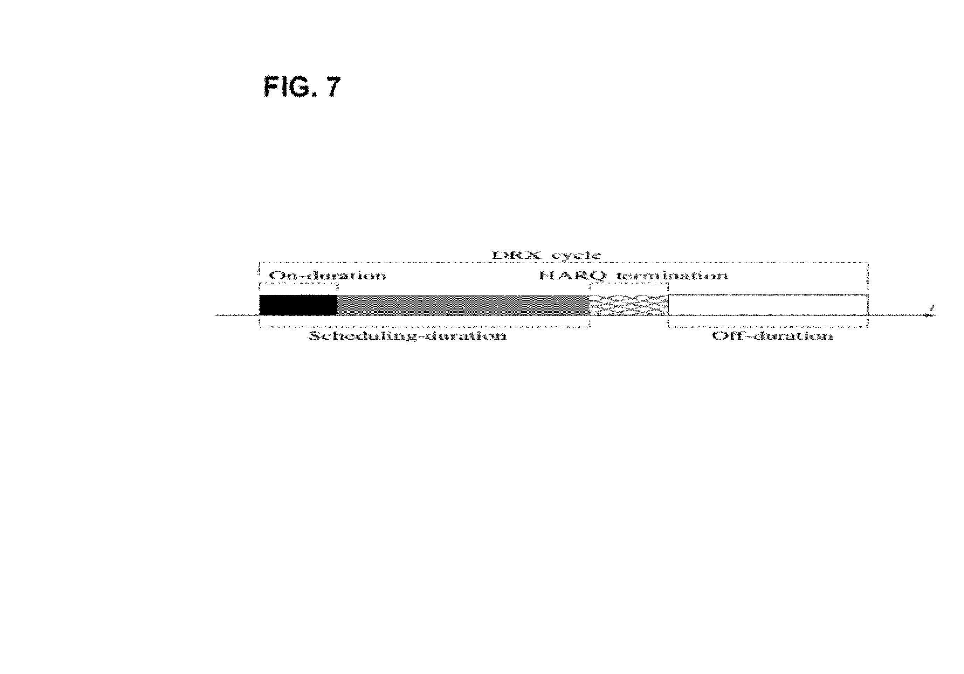

2. In the second 3GPP mechanism, discontinuous reception (DRX) -based smart scheduling mechanisms in the LTE radio 104 may provide interference-free periods. This provides a cycle of active-duration/HARQ termination/off-duration cycle. The cycle length is usually 40-120 ms. The active-duration is typically 10-80 % of the cycle. The HARQ termination is approximately 5-10 ms, but may vary. The off-duration is the rest of the cycle. The off-duration of the LTE radio 104 is the interference-free period for the WLAN radio 102, as illustrated in Figure 7.

Figure 7 is an example discontinuous reception (DRX) smart scheduling overview for the LTE radio 104, according to an example embodiment of the invention. The DRX cycle (typically 40-120 ms) may be divided into the on-duration (which is always active for the user equipment), the scheduling duration (which may extend the active time, if there is new data to be transmitted), the HARQ termination, and the off-duration. During the on-duration and scheduling duration, new LTE HARQ processes may be initiated by eNodeB. Downlink (DL) HARQ processes are initiated by transmitting a DL transport block. Uplink (UL) HARQ processes are initiated by eNodeB transmitting an UL grant, and upon receiving the grant, the user equipment transmitting an UL transport block. The HARQ termination period is the transition period when the existing HARQ processes terminate by a positive acknowledgement transmission, or the transport blocks are retransmitted until a positive acknowledgement is received. Off-duration of the LTE radio 104 provides interference-free period (usually 10-80 % of the DRX cycle) for the WLAN radio 102.

During normal active operation of the LTE radio 104, the LTE uplink (transmitter) activity may be accurately predicted in 2-3 ms in advance. This technique may also provide short interference-free periods for the WLAN radio 102. It may be mainly usable for the following cases:
- Providing interference-free periods during HARQ termination in DRX smart scheduling of the LTE radio 104;
- LTE band 7 / WLAN scenario (only LTE transmitter of the LTE radio 104 interferes with the WLAN radio 102, but the LTE radio 104 receiver is not interfered by the WLAN radio 102).

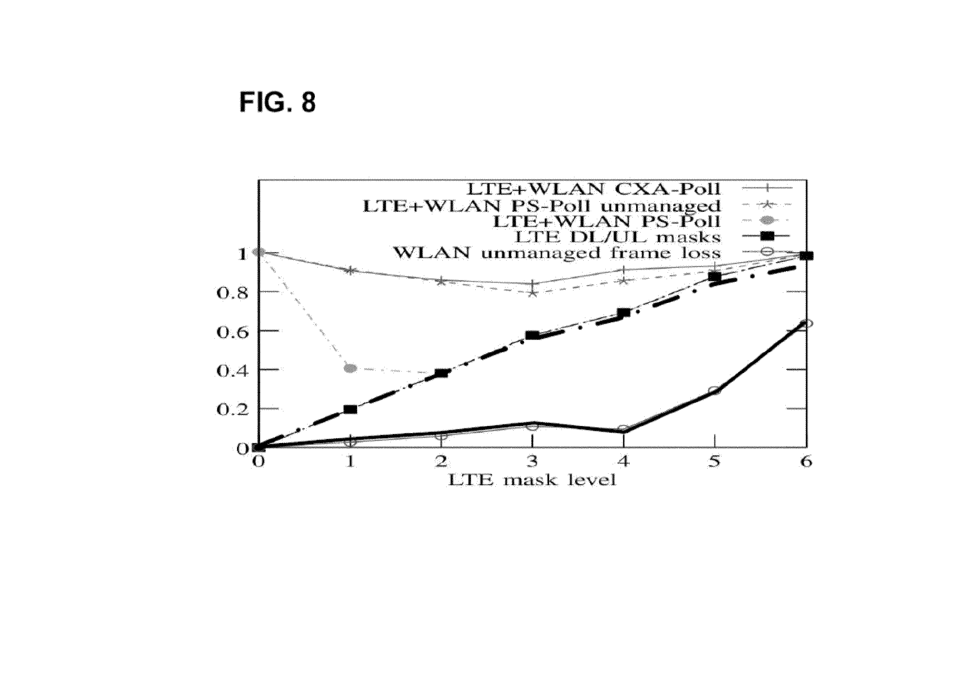

Figure 8 illustrates an example simulated comparison of power save poll (PS-Poll) and coexistence-aware poll (CXA-Poll) of the WLAN radio, with uplink (UL)-Hybrid Automatic Repeat Request (HARQ)/downlink (DL)-HARQ patterns of the LTE radio, according to an example embodiment of the invention. The pattern levels used are as shown in Figure 6 for the LTE mask patterns of the LTE radio 104. The scenario is the operation of the LTE radio 104 and WLAN radio 102 during hard IDC conditions. LTE radio 104 uses a maximum DL/UL load for the patterns. For the WLAN radio 102, the maximum received data throughput is measured. The unmanaged PS-Poll and managed CXA-Poll are shown to obtain good throughput. The CXA-Poll and managed PS-Poll are shown to obtain near-zero frame loss. Only the CXA-Poll is shown to obtain both good throughput and near-zero frame loss.

With PS-Poll, there are two variants
• Unmanaged: The WLAN radio 102 may operate without knowledge of the offending remote LTE user equipment (UE). The LTE transmitter noise may be, however, carrier-sensed. Therefore, the WLAN radio 102 may not attempt to initiate PS-Poll delivery when the LTE UE is transmitting.
• Managed: The WLAN radio 102 may operate with the knowledge of the offending remote LTE equipment (UE). The WLAN radio 102 may attempt to initiate a PS-Poll delivery only when there is at least 3-ms of interference-free period.

The reported values in Figure 8 are the combined relative performance (the abscissa value of 1 is the maximum throughput without interference) and frame loss. With the hard coexistence case, a combined relative performance close to 1 is optimal. Combined relative performance = relative LTE throughput + relative WLAN throughput.

With unmanaged PS-Poll of Figure 8, the combined relative performance is close to 1 with all pattern levels, but the frame loss rate is heavy, especially on level 5 (the highest pattern level with any of the interference-free periods).

With managed PS-Poll of Figure 8, the combined relative performance drops quickly, as the small interference-free periods cannot be used efficiently. At level 2 and beyond, the WLAN radio 102 may be inoperative, as there are no more 3-ms interference-free periods. There is no frame loss, except for occasional beacon frames.

With CXA-Poll of Figure 8, the combined relative performance is close to 1 and always above the unmanaged PS-Poll. There is no frame loss, except for occasional beacon frames. Only the CXA-Poll has a high combined relative performance and near-zero frame loss.

Using the description provided herein, the embodiments may be implemented as a machine, process, or article of manufacture by using standard programming and/or engineering techniques to produce programming software, firmware, hardware or any combination thereof.

Any resulting program(s), having computer-readable program code, may be embodied on one or more computer-usable media such as resident memory devices, smart cards or other removable memory devices, or transmitting devices, thereby making a computer program product or article of manufacture according to the embodiments. As such, the terms "article of manufacture" and "computer program product" as used herein are intended to encompass a computer program that exists permanently or temporarily on any computer-usable non-transitory medium.

As indicated above, memory/storage devices include, but are not limited to, disks, optical disks, removable memory devices such as smart cards, SIMs, WIMs, semiconductor memories such as RAM, ROM, PROMS, etc. Transmitting mediums include, but are not limited to, transmissions via wireless communication networks, the Internet, intranets, telephone/modem-based network communication, hard-wired/cabled communication network, satellite communication, and other stationary or mobile network systems/communication links.

Although specific example embodiments of the invention have been disclosed, a person skilled in the art will understand that changes may be made to the specific example embodiments without departing from the scope of the invention.

## Claims

1. A method, comprising:
determining for a first radio in a multi-radio device, a next instant of activity;
transmitting by a second radio in the multi-radio device, to another wireless device, control information including a duration value for an interval to occur before a next instant of activity by the first radio, during which interval wireless communication between the second radio of the multi-radio device and the another wireless device must be completed; and
entering by the second radio in the multi-radio device, a power save state by end of the interval.

2. The method of claim 1, wherein the control information indicates the interval is scheduled on a repetitive basis by the first radio.

3. The method of claim 1 or claim 2, wherein the interval is one of an interference-free period, a quiet interval of the first radio in the multi-radio device, a sleep interval of the first radio in the multi-radio device, a communication opportunity, or a communication window.

4. The method of any of the preceding claims, further comprising:
generating the control information for the second radio in the multi-radio device.

5. A method, comprising:
receiving, by a wireless device in a wireless network, control information including a duration value for an interval during which interval wireless communication with a source device of the control information must be completed; and
managing communications within the wireless network including scheduling communications with the source device of the control information to occur during the interval.

6. The method of claim 5, wherein the control information indicates the interval is scheduled on a repetitive basis.

7. The method of claim 5 or claim 6, wherein the interval is one of an interference-free period, a quiet interval of the source device, a sleep interval of the source device, a communication opportunity, or a communication window.

8. A computer program comprising computer readable program code configured to cause performing of the method of any of the preceding claims when said program is run on a computer.

9. The computer program of claim 8, wherein the computer program is a computer program product comprising a computer-readable medium bearing computer program code embodied therein for use with a computer.

10. An apparatus, comprising:
means for determining for a first radio in a multi-radio device, a next instant of activity;
means for causing the second radio in the multi-radio device, to transmit to another wireless device, control information including a duration value for an interval to occur before a next instant of activity by the first radio, during which interval wireless communication between the second radio of the multi-radio device and the another wireless device must be completed; and
means for causing the second radio in the multi-radio device, to enter a power save state by end of the interval.

11. The apparatus of claim 10, wherein the control information indicates the interval is scheduled on a repetitive basis by the first device.

12. The apparatus of claim 10 or claim 11, wherein the interval is one of an interference-free period, a quiet interval of the first radio in the multi-radio device, a sleep interval of the first radio in the multi-radio device, a communication opportunity, or a communication window.

13. The apparatus of any of claims 10- 12 further, comprising:
means for generating the control information for the second radio in the multi-radio device.

14. An apparatus, comprising:
means for receiving control information including a duration value for an interval during which interval wireless communication with a source device of the control information must be completed; and
means for managing communications within the wireless network including scheduling communications with the source device of the control information to occur during the interval.

15. The apparatus of claim 14, wherein the control information indicates the interval is scheduled on a repetitive basis.

16. The apparatus of claim 14 or claim 15, wherein the interval is one of an interference-free period, a quiet interval of the source device, a sleep interval of the source device, a communication opportunity, or a communication window.
